# EUROPEAN PATENT SPECIFICATION

(11) **EP 0 719 707 B1**
(45) Date of publication and mention of the grant of the patent: **25.11.1998**
(21) Application number: 95120724.0
(22) Date of filing: 29.12.1995
(51) Int. Cl.: B65B 51/08, A22C 11/12

(54) **Tying machine for closing a flexible container with a tying string**
Bindemaschine zum Schliessen eines flexiblen Behälters mittels eines Bindestreifens
Machine de liage pour fermer un récipient flexible avec une bande de liage

(30) Priority: 30.12.1994 IT VI940185
(43) Date of publication of application: 03.07.1996
(73) Proprietor: Caretta, Alfredo, 36030 Sarcedo (Vicenza) (IT)
(72) Inventor: Caretta, Alfredo, 36030 Sarcedo (Vicenza) (IT)
(74) Representative: Forattini, Amelia

(56) References cited:
- US-A- 3 940 169

## Description

The present invention relates to a tying machine for automatically tying a string to form a knot for closing flexible containers.

Many different systems are used, in the field of packaging, to close containers, such as sacs, bags, sausage skins and similar products, and their different configuration depends mainly on the product to be packaged and on the type of material of which the container of the product is made.

A particular packaging system provides that a flexible twine or string is tied around the body of the container, which must be made of a flexible material; the string closes the package by constricting a portion of the flexible material.

In the current state of the art there are automatic machines that perform the tying of flexible packages by forming knots of different kinds with bights that are constituted by eyes and loops that are variously joined together.

The greatest disadvantages of current tying machines are due to the complexity of the mechanisms required to perform the various folds, twists, and turns to which the string must be subjected and which are required to form first the bight and then the final knot, which is wound around the container.

From US-3 940 169 it is known a process and apparatus for forming from string a simple loop knot either through or about a product. The apparatus comprises a rotating drum carrying about its periphery a plurality of identical heads equally spaced from each other. Each head is provided with a pair of pleating jaws assemblies, a pair of clamping jaw assemblies, a pair of string tensioners, a string metering device, a string shear and clamp, a needle to pass a metered length of the string through the product , spreader-pliers to form the simple loop knot and means to cut the product into individual products.

The aim of the present invention is to provide a tying machine, capable of overcoming the drawbacks of the prior art tying machines by providing a quick tying operation ensuring the obtainment of a full constriction of the container.

A further aim is to provide a machine by using mechanisms that are simple to produce. Still a further aim is to provide a machine having in a reduced space, a fully automatic device in which the operator merely has to place the portion of the container to be closed by means of a knot.

These aims are met with a tying machine as defined in claim 1.

The simplicity of operation of the machine according to the invention is further enhanced by formation of a very simple knot that is constituted by a single eye and by two mutually opposite side loops, achieving a perfect tying action.

The operating feature of the machine according to the invention as defined in claim 1 is represented by the particular system for winding the string around the container, which is obtained by virtue of an oscillating arm, and by the particular method of formation of the knot, which is obtained by means of a clamp device that moves four string segments, widening two segments first and then pulling the other two so as to produce the desired knot.

Operationally, the machine has a string feed means comprising a clamp that keeps the end of the string locked and a device for frictionally guiding the string, so as to have a taut portion of the string and so as to therefore allow engagement with the end of the oscillating arm.

The oscillating arm is pivoted on the structure of the machine and has the purpose of providing two oppositely arranged loops around the container.

This operation is performed by hooking the string and, by an alternating rotation of the arm, by passing the eye thus obtained first below and then above the container.

At the end of the movement of the movable arm, the eye arranges itself proximate to, and below, the engagement region of the string.

This operation forms two pairs of substantially parallel segments of string that lie between the engagement point of the string and the container that is partially tied by the two loops that are obtained by passing the eye first below and then above the item to be tied.

More specifically, the outermost pair of segments extends from the engagement region to the container, and the innermost segments extend in the opposite direction, from the container to the engagement region, but are more inclined over the horizontal, so that they lie below the first pair of segments.

The subsequent operation, that is to say, the formation of the interlacing of the knot, is performed by using a gripping device that is constituted by three elements, wherein two side jaws can move transversely with respect to the central element and the entire device is arranged downward with respect to the region where the two ends of the string are arranged.

This device can move vertically, fits between the two innermost segments of the string, which are located downward with respect to the two outermost segments.

The subsequent widening of the side jaws causes the mutual spacing of the innermost pair of string segments until they are arranged outward with respect to the outermost pair of string segments.

Then the gripping device moves upward again, so as to allow its two side jaws to cooperate with the oentral elements to lock the pair of string segments that run from the engagement region to the container and are at this point located inward with respect to the outer pair of string segments.

The locking of these two segments allows the subsequent action for cutting the string segment that is still connected to the feeder unit and therefore allows the formation of the two ends.

Simultaneously with these two last operating steps, the eye is extracted from the oscillating arm, which by rotating in the opposite direction resumes the initial position.

Then the gripping device moves downward, trailing the two ends of the string; in turn, these ends move the eye closer to the container and the eye forms the two mutually opposite side loops.

The return stroke of the gripping device ends when the knot thus obtained, that is to say, the eye with the two mutually opposite side loops, is fully interlaced, that is to say, when the knot has been formed.

Advantageously, during the final stage of the formation of the knot, provision is made for the use of a pusher that has the purpose of generating a tension whose direction is opposite to the direction of the movement of the gripping device that pulls the ends of the string, with the purpose of ensuring maximum tightening of the knot.

Moreover, the pusher also has the purpose of expelling the finally tied part from the work area.

Finally, a particular configuration of the end of the rotating arm is provided in order to facilitate the operation for engagement, pulling and release of the string.

These and other characteristics of the invention will become apparent hereinafter by virtue of the description of a particular embodiment thereof, given only by way of non-limitative example with the aid of the accompanying drawings, wherein:
Figure 1 is a schematic side view of a first embodiment of the machine according to the invention;
Figure 2 is a sectional plan view of the machine according to the invention, taken along the plane II-II of Figure 1;
Figures 3 to 6 show subsequent operating positions of the machine of Figure 1;
Figures 7 to 10 show in enlarged scale side views of a detail of the machine of Figure 1 in subsequent operating conditions;
Figures 11 and 12 are schematic side and top views of the final stage of the pulling of the string;
Figures 13 and 14 are schematic side and top views of the stage for winding around the container;
Figure 15 is a schematic side view showing one end position of the arm;
Figures 16 and 17 are schematic top views, of the machine subsequent operative positions;
Figures 18 and 19 are respectively a side view and a top view of the machine;
Figures 20 to 22 are respectively a side view and two top views during the string cutting stage;
Figures 23 to 25 are respectively a side view and two top views during the tying stage;
Figures 26 and 27 are schematic side views of a second embodiment of tying machine according to the invention in two different operating phases;
Figures 28 and 29 are side views of a detail of Figures 26 and 27 in enlarged scale;
Figures 30 and 31 are top views of the machine shown in Figures 26 and 27;

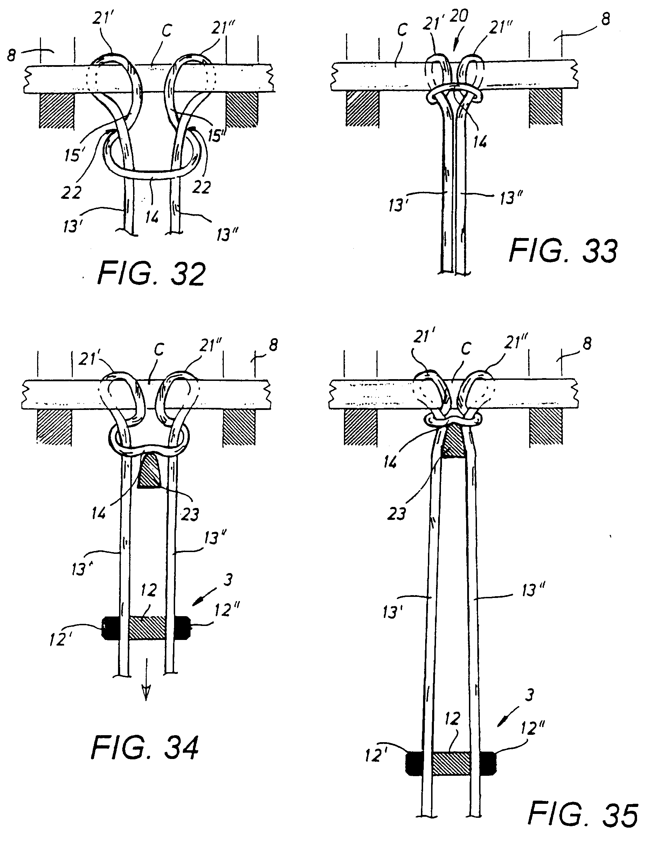

Figures 32 and 33 are front views of the knot during and at the end of the tying operation;
Figures 34 and 35 are views of the action of the central pusher during the knotting stage.

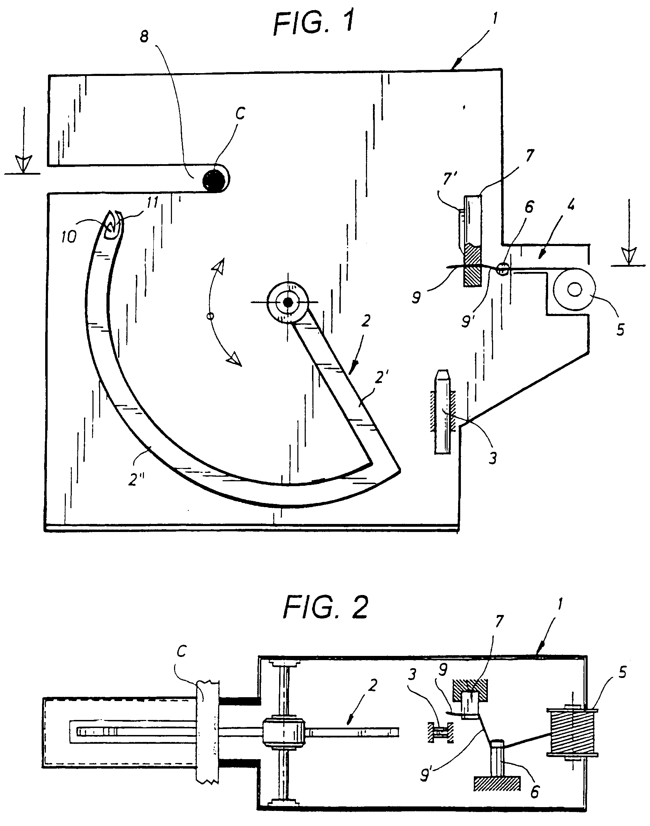

With reference to Figures 1 and 2, the machine according to the invention comprises essentially a supporting structure 1 on which is pivotally mounted an arm 2, rotating about a horizontal transverse axis, a movable gripping device 3 and a string feeding unit 4.

The feeding unit comprises a bobin or feeder spool 5 of string, a guiding device 6, which can move in a transverse direction, and a clamp 7 provided with a sliding cutting blade 7'.

Container C to be closed is inserted into a recess 8 of the structure 1 of the machine, which has the function of retaining the container during the tying action.

Clamp 7 is arranged to initially keep the free end 9 of the string which is frictionally engaged by guiding device 6 to form a taut portion 9'.

Oscillating arm 2 is formed by a radial portion 2' and by a curved portion 2'' having the shape of a circular sector centered on the rotation axis.

Free end 10 of curved portion 2'' of arm 2 has a particular shape suitable for hooking and pulling taut portion 9' of the string. In particular, free end 10 has a guiding slit 11 having an inlet end which allows the passage of the string and a hook extension 11' formed at the end of slit 11 in a backward direction with respect to its inlet end.

Gripping device 3 is formed by a central element 12 and two lateral jaws 12' and 12'' which can move transversely and symmetrically with respect to the central element 12.

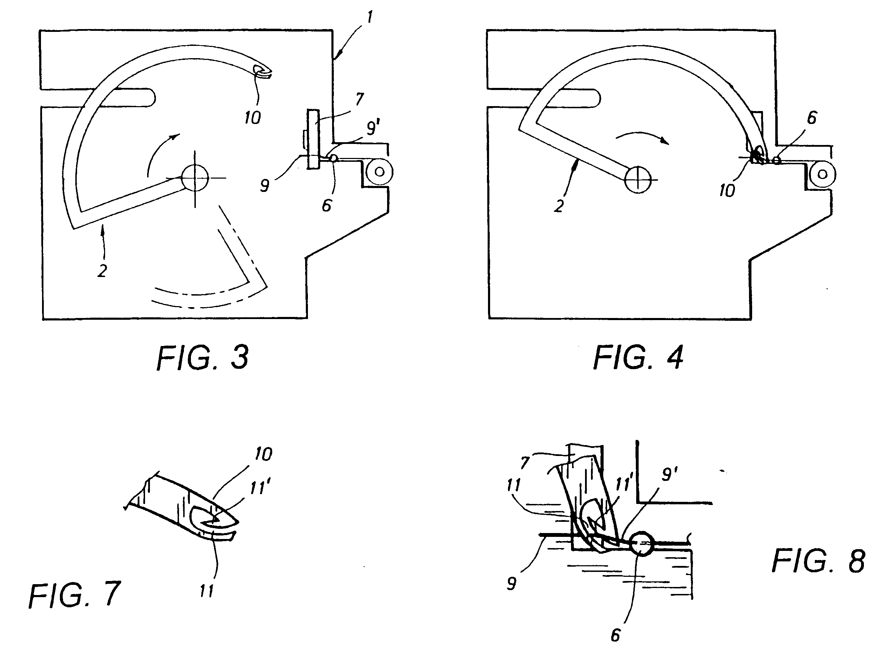

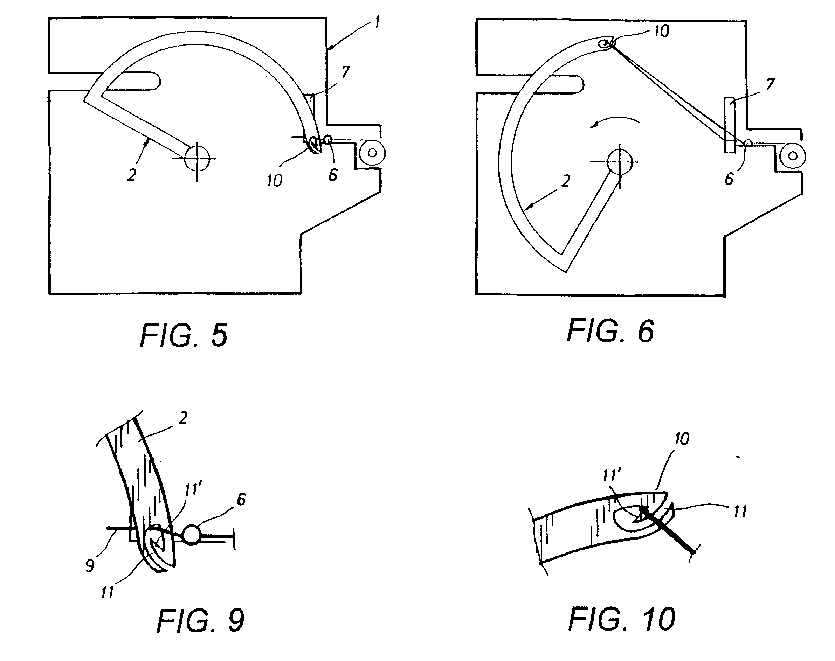

Figures 3 to 6 are views of the first step of the tying operation, that is the step of hooking taut portion 9' of the string, by means of rotation of arm 2 in a forward direction and of pulling the hooked string by means of rotation of the arm in a backward direction.

This first step generates two longitudinal segments of string 13' and 13'' which are connected by a transverse segment forming an eye 14.

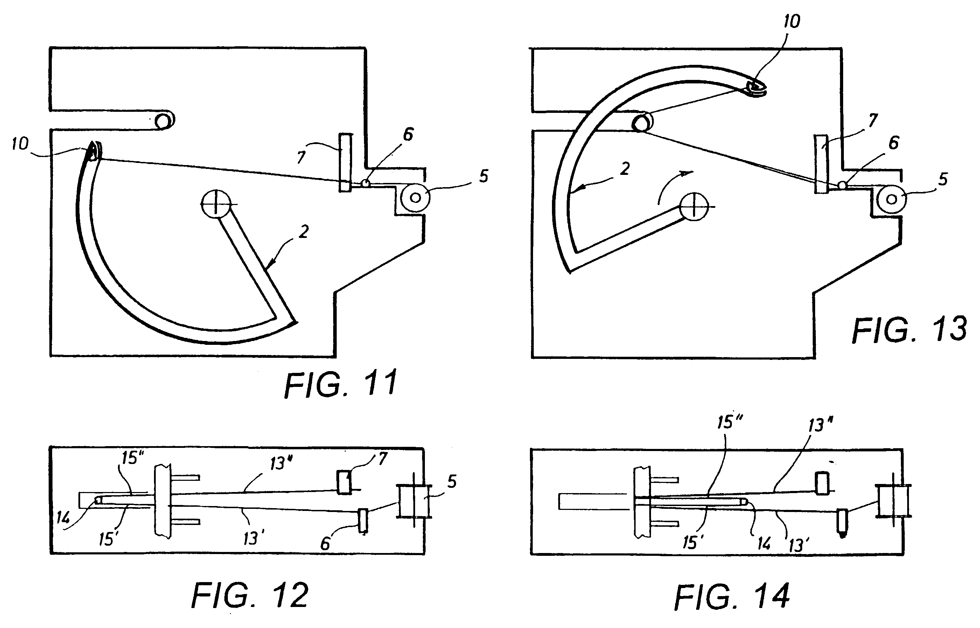

When oscillating arm 2 is brought back to its initial position, after formation of the eye constituted by the two string segments 13' and 13'', container C is arranged above these segments, as shown in Figures 11 and 12.

Oscillating arm 2 then rotates in a forward direction, so that the string winds partially around container C and the two new string segments 15' and 15''. These new segments arrange themselves inside the initial segments 13' and 13'', as shown in Figures 13 and 14.

Oscillating arm 2 ends its forward rotation so as to arrange eye 14, that is to say, the ends of segments 15', 15'', downward with respect to the two segments 13', 13''.

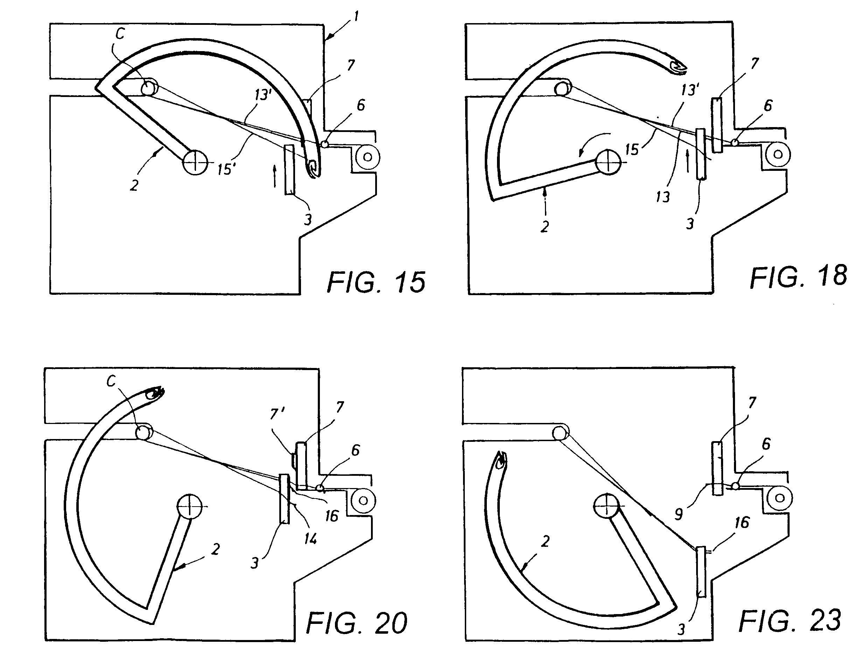

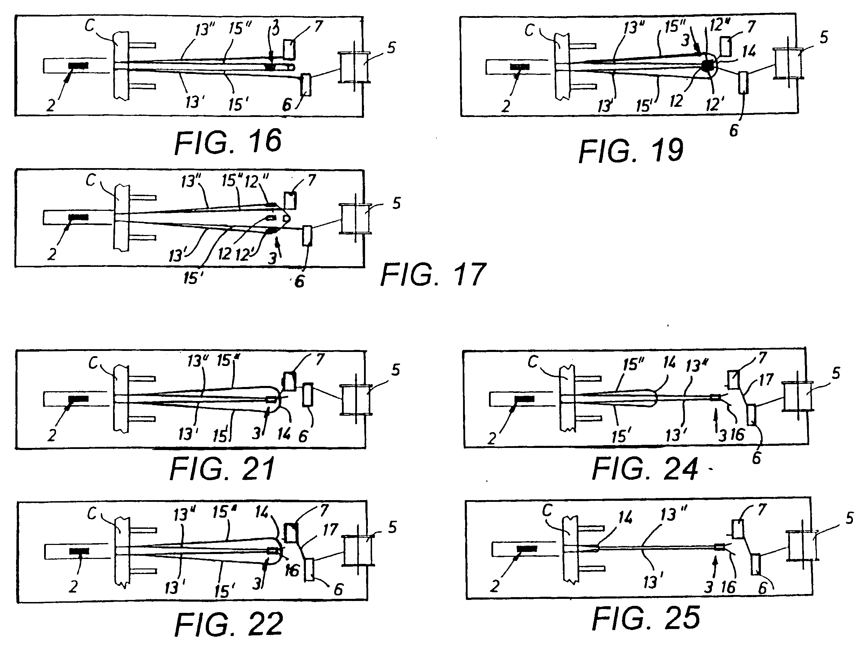

Then gripping device 3 rises and inserts ends 9, 16 of the string inside the two segment 15' and 15'', as shown in Figures 15 and 16.

The transverse movement of the two jaws 12' and 12'' causes the mutual spacing of the two inner string segments 15' and 15'' until they are arranged externally with respect to the other two string segments 13' and 13'', as shown in Figure 17.

Gripping device 3 moves upward its upper position, so as to allow the two outer movable jaws 12' and 12'' to block the two string segments 13' and 13'' when these parts move so that they are again adjacent to central part 12, as shown in Figures 18 and 19.

At the same time, eye 14 is extracted from shaped end 10 of movable arm 2, which resumes its inactive position by rotating in the opposite direction.

Locking the two string segments 13' and 13'' allows the subsequent action for cutting segment 13' to remove the string portion, which is required to form the knot, from feeder spool 5.

String segment 13'' is cut by the action of a cutting blade 7' that is slidably mounted on the clamp 7.

In operation, clamp 7 initially moves upward, freeing the end of string segment 13''.

Then guiding device 6 moves transversely, arranging a portion of segment 13' below the clamp 7 which, by moving downward, locks the segment and allows to cut it by cutting blade 7'.

At the same time, guiding device 6 retracts into the initial position, generating a new string portion 17 that is taut and ready for a subsequent hooking action;

At the end of the cutting action, the two ends 9, 16 of portions 13' and 13'' are thus free, so that when gripping device 3 reverses its stroke and moves downward, it trails the above mentioned ends of the string with it; these ends, in turn, cause eye 14 to move so that it is adjacent to container C, as shown in Figures 23 to 25.

Knot 20, which is obtained with the process described above, is provided by the interlacing of a bight that has eye 14 and two loops 21' and 21'' arranged in a mutually symmetrical manner and have a twisting point 22 that ensures perfect firmness once knot 20 has been fully formed.

Finally, a pusher 23 acts during the final stage of the forming of knot 20; this pusher is arranged centrally between the two ends 13' and 13'' of the string.

The pushing action of pusher 23 is opposite to the direction of the traction applied by gripping device 3 to the ends of the string.

This arrangement prevents container C from flexing under the thrust of gripping device 3 and finally ensures the tightest possible tying.

Pusher 23 also acts as device for expelling the tied product from the machine.

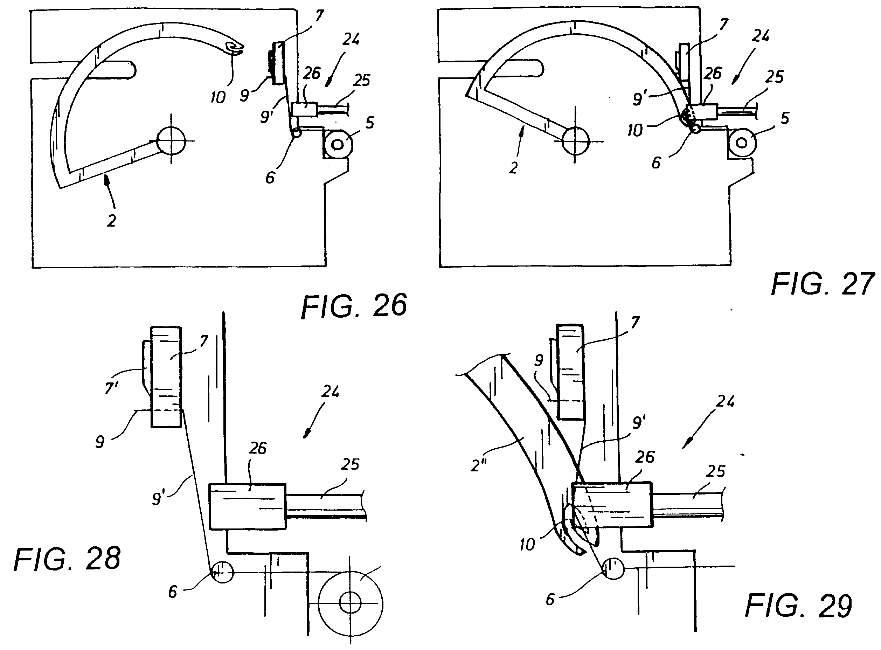

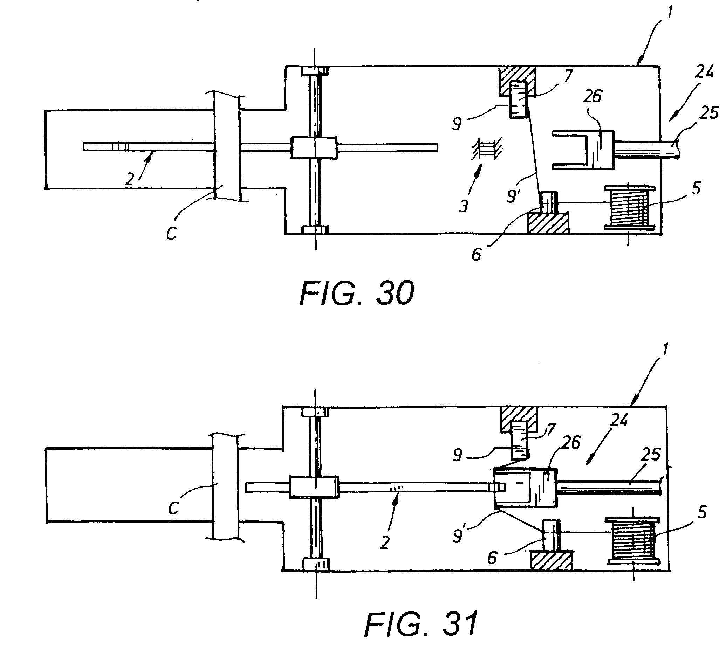

Figures 26 to 31 show a further embodiment of the tying machine according to the invention which differs from the first one essentially by the addition of a positioning element 24 that serves to bring taut Portion 9' of the string between clamp 7 and guiding device 6, closer to the end 10 of the arm to facilitate the engagement with the hooking end 10 of the arm and to render the hooking operation more reliable.

Positioning element 24 comprises a rod 25 slidably mounted on structure 1 of the machine so as to move in a substantially horizontal direction. Rod 25 has a fork-like head 26 so shaped to push taut portion 9' of the string and to bring it closer to arm end 10 to precisely align this portion with slit 11.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. A Tying machine for automatically tying a string to form a knot (20) for closing a flexible container, wherein the knot (20) is arranged at the end of two longitudinal first segments of string (13' , 13'') which form two symmetrically opposed side loops (21', 21'') defined by an eye (14) formed by a transverse portion of the segments (13', 13''), and wherein the tying machine comprises means (8) for supporting a container (C) in a substantially transverse position, means (7) for clamping one end (9) of a string, means (4, 6) for controllably feeding the string to provide a taut portion (9') of string, means (10, 11, 11') for hooking said taut portion of string, means (2) for winding the string segments (13', 13''), originating from said taut portion (9'), in a longitudinal direction around an end portion of said container (C) to form the eye (14), which comprise an arm (2) pivotally mounted to a supporting structure (1) of the machine so as to oscillate in a substantially vertical plane, said arm (2) comprising a radial portion (2') connected to an outer curved portion (2'') concentrical with an oscillating axis of the arm, said radial portion (2') and said outer portion (2'') having an extension such as to prevent interference with said container (C), said machine further comprising means (7') for cutting said string to form another string end (16), means (3) for gripping said string ends (9, 16), said gripping means comprising a central elongate element (12) and a pair of side jaws (12', 12'') which can move outwardly away from said central element (12) to space apart a second pair of segments (15', 15'') joined by said eye (14) upon translation of said gripping means (3) towards its upper position, said side jaws (12', 12'') moving inwardly towards the central element (12) to clamp said string ends (9, 16) to trail them towards a lower position to tighten the knot (20), a pusher (23) being arranged between the first segments (13', 13'') of the string, the pushing action of the pusher (23) being opposite to the direction of traction applied by the gripping means (3) on said first segments (13', 13'').

2. Tying machine according to claim 1, characterized in that said hooking means (10) are formed at the free end of said outer curved portion (2'') of said arm and comprises a slit (11) allowing the inlet of said string and a hook projection (11') formed at the end of said slit (11) to prevent disengagement of the string.

3. Tying machine according to the preceding claims, characterized in that said arm (2) is actuated to oscillate between an initial position with its end (10) far from said feeding means (4, 6) and a final position with said end (10) close to said feeding means (4, 6).

4. Tying machine according to the preceding claims, characterized in that said oscillating arm (2) in its final position forms on said tight portion of string and wound around said container (C) a first pair of segments (13', 13'') extending towards said feeding means (4, 6) and said locking means (7), and a second pair of segments (15', 15'') extending toward said hooking means (10) and connected by said eye (14).

5. Tying machine according to the preceding claims, characterized in that said gripping means (3) are actuated to move in a substantially vertical direction between an upper position close to said feeding means (4, 6) and a lower position far from said feeding means (4, 6).

6. Tying machine according to claim 1, characterized in that said feeding means comprises a spool (5) of string and a guide element (6) frictionally engaging said string to form said taut portion.

7. Tying machine according to the preceding claims, characterized in that it further comprises a positioning element (24) comprising a rod (25) supporting a head (26), said rod being alternatively movable in a substantially horizontal direction to bring said taut portion (9') of string closer to said arm (2) to promote the engagement of said taut portion (9') with said hooking means (11, 11').

## Patentansprüche

1. Bindemaschine für das automatische Binden eines Bindestreifens zu einem Knoten (20) zum Schließen eines flexiblen Behälters, wobei der Knoten (20) an dem Ende von zwei längsverlaufenden ersten Segmenten des Bindestreifens (13', 13'') angeordnet ist, die zwei symmetrische, einander gegenüberliegende Schleifen (21', 21'') bilden, die durch eine Öse (14) definiert sind, die durch einen querverlaufenden Abschnitt der Segmente (13', 13'') gebildet ist, wobei sie eine Vorrichtung (8) für das Halten eines Behälters (C) in einer im wesentlichen quer angeordneten Position umfaßt, daß sie eine Vorrichtung (7) für das Festklemmen eines Endes (9) eines Bindestreifens umfaßt, daß sie eine Vorrichtung (4, 6) für das kontrollierbare Zuführen des Bindestreifens umfaßt, um einen straff gespannten Abschnitt des Bindestreifens (9') auszugestalten, daß sie Vorrichtungen (10, 11, 11') für das Einhaken des straff gespannten Bindestreifenabschnittes umfaßt, daß sie eine Vorrichtung (2) für das Wickeln der Bindestreifensegmente (13', 13'') umfaßt, um ausgehend von dem straff gespannten Abschnitt (9') in einer Längsrichtung um einen Endabschnitt des Behälters (C) herum die Öse (14) zu bilden, wobei die Vorrichtung einen Lenker (2) beinhaltet, der gelenkig gelagert an einer tragenden Struktur (1) der Maschine befestigt ist, um in einer im wesentlichen vertikalen Ebene zu pendeln, dabei besteht der Lenker (2) aus einem radialen Abschnitt (2'), der mit einem nach außen gebogenen, konzentrisch zur Schwenkachse des Lenkers angeordneten Abschnitt (2'') verbunden ist, wobei der radiale Abschnitt (2') und der äußere Abschnitt (2'') eine solche Ausdehnung aufweisen, so daß eine Kollision mit dem Behälter (C) verhindert wird, die Maschine umfaßt des weiteren eine Vorrichtung (7') für das Zerschneiden des Bindestreifens, um ein weiteres Bindestreifenende(16) zu bilden, Vorrichtungen (3) für das Einspannen der Bindestreifenenden (9, 16), wobei die Einspannvorrichtungen ein zentrales, längliches Element (12) und ein Paar Schiebeklemmbacken (12', 12'') umfassen, die sich nach außen, weg von dem zentralen Element (12), bewegen können, um ein zweites Paar von Segmenten (15', 15''), die über die Öse (14) verbunden sind, mittels der Bewegung der Einspannvorrichtungen (3) in Richtung ihrer oberen Stellung bei Seite anzuordnen, dabei bewegen sich die Schiebeklemmbacken (12', 12'') nach innen, auf das zentrale Element (12) zu, um die Bindestreifenenden (9, 16) einzuklemmen und um sie in Richtung der unteren Stellung zu ziehen, um den Knoten (20) festzuziehen, wobei ein Drücker (23) zwischen den ersten Segmenten (13', 13'') des Bindestreifens angeordnet ist und die Drückerbewegung des Drückers (23) entgegengesetzt der durch die Einspannvorrichtungen (3) an den ersten Segmenten (13', 13'') bestimmten Zugrichtung ist.

2. Bindemaschine nach Anspruch 1, dadurch gekennzeichnet, daß die Einhakvorrichtungen an dem freien Ende des nach außen gebogenen Abschnittes (2'') des Lenkers ausgebildet sind und einen Schlitz (11), der die Aufnahme des Bindestreifens erlaubt, sowie einen Widerhaken, der am Ende des Schlitzes (11) ausgebildet ist, um das Loslösen des Fadens zu verhindern, beinhaltet.

3. Bindemaschine nach den vorhergehenden Ansprüche, dadurch gekennzeichnet, daß der Lenker (2) betätigt wird, um zwischen einer anfänglichen Stellung, in der sich sein Ende (10) entfernt von der Zufuhrvorrichtung (4, 6) befindet, und einer Endstellung, in der sich das Ende (10) nahe der Zufuhrvorrichtung (4, 6) befindet, zu pendeln.

4. Bindemaschine nach den vorhergehenden Ansprüchen, dadurch gekennzeichnet, daß der pendelnde Lenker (2) in seiner Endstellung den straff gespannten Bereich des Bindestreifens aufnimmt und ein erstes Paar von Segmenten (13', 13'') um den Behälter (C) gewickelt hat, die sich in Richtung der Zuführvorrichtung (4, 6) und der Verschlußvorrichtung (7) erstrecken, und ein zweites Paar von Segmenten (15', 15''), die sich in Richtung der Einhakvorrichtung (10) erstrecken und durch die Öse (14) miteinander verbunden sind.

5. Bindemaschine nach den vorhergehenden Ansprüchen, dadurch gekennzeichnet, daß die Einspannvorrichtungen (3) betätigt werden, um sich in einer im wesentlichen vertikalen Richtung zwischen einer oberen Stellung, nahe der Zuführvorrichtung (4, 6) und einer unteren Stellung, entfernt von der Zuführvorrichtung (4, 6) zu bewegen.

6. Bindemaschine nach Anspruch 1, dadurch gekennzeichnet, daß die Zuführvorrichtung eine Bindestreifenspule (5) sowie ein Führungselement (6) beinhaltet, das der Bindestreifen reibschlüssig in Eingriff nimmt, um den straff gespannten Bereich auszubilden.

7. Bindemaschine nach einem der vorhergehenden Ansprüche, dadurch gekennzeichnet, daß sie des weiteren ein Positionierungselement (24) beinhaltet, das eine Stange (25) umfaßt, die einen Kopf (26) trägt, wobei die Stange in einer im wesentlichen horizontalen Richtung alternativ bewegbar ist, um den straff gespannten Abschnitt (9') des Bindestreifens näher zum Lenker (2) zu bringen, um den Eingriff des straff gespannten Bereiches (9') in die Einhakvorrichtung zu unterstützen.

## Revendications

1. Machine de nouage, permettant de nouer automatiquement une ficelle pour former un noeud (20) servant à fermer un emballage souple, dans laquelle le noeud (20) est disposé à l'extrémité de deux premiers segments longitudinaux de ficelle (13', 13'') qui forment deux boucles latérales (21', 21'') se faisant face d'une manière symétrique et définies par une ganse (14) formée par une partie transversale des segments (13', 13''), la machine de nouage comprenant des moyens (8) servant à soutenir un emballage (C) dans une position sensiblement transversale, des moyens (7) servant à pincer une extrémité (9) d'une ficelle, des moyens (4, 6) servant à acheminer la ficelle d'une manière réglable de manière à fournir une partie tendue (9') de ficelle, des moyens (10, 11, 11') servant à accrocher la partie tendue de ficelle, des moyens (2) qui servent à enrouler les segments de ficelle (13', 13''), provenant de la partie tendue (9'), suivant une direction longitudinale et autour d'une partie d'extrémité de l'emballage (C) de manière à former la ganse (14), et qui comprennent un bras (2) monté basculant sur une structure de support (1) de la machine de manière à osciller dans un plan sensiblement vertical, le bras (2) comportant une partie radiale (2') reliée à une partie courbe extérieure (2'') concentrique à un axe d'oscillation du bras, la partie radiale (2') et la partie extérieure (2'') présentant une étendue qui permet d'empêcher que l'emballage (C) ne fasse obstacle, la machine comprenant en outre des moyens (7') servant à couper la ficelle de manière à former une autre extrémité de ficelle (16), des moyens de préhension (3) servant à saisir lesdites extrémité de ficelle (9, 16), ces moyens de préhension comportant un élément central allongé (12) et deux mâchoires latérales (12', 12'') qui peuvent s'éloigner de l'élément central (12) vers l'extérieur de manière à écarter l'un de l'autre une seconde paire de segments (15', 15''), réunis par la ganse (14), lors d'une translation des moyens de préhension (3) vers leur position supérieure, les mâchoires latérales (12', 12'') se déplaçant vers l'intérieur en direction de l'élément central (12) de manière à pincer les extrémités de ficelle (9, 16) afin de les tirer vers une position inférieure en vue de serrer le noeud (20), un poussoir (23) étant disposé entre les premiers segments (13', 13'') de la ficelle, l'action de poussée du poussoir (23) étant opposée à la direction de traction appliquée par les moyens de préhension (3) sur les premiers segments (13', 13'').

2. Machine de nouage suivant la revendication 1, caractérisée en ce que les moyens d'accrochage (10) sont formés à l'extrémité libre de la partie courbe extérieure (2'') du bras et comportent une fente (11), permettant l'entrée de la ficelle, et une partie en saillie formant crochet (11') ménagée à l'extrémité de la fente (11) de manière à empêcher une venue hors de prise de la ficelle.

3. Machine de nouage suivant les revendications précédentes, caractérisée en ce que le bras (2) est actionné de manière à osciller entre une position initiale, dans laquelle son extrémité (10) est éloignée des moyens d'acheminement (4, 6), et une position finale dans laquelle cette extrémité (10) est proche des moyens d'acheminement (4, 6).

4. Machine de nouage suivant les revendications précédentes, caractérisée en ce que, dans sa position finale, le bras oscillant (2) forme, sur ladite partie serrée de ficelle et enroulée autour de l'emballage (C), une première paire de segments (13', 13''), s' étendant vers les moyens d' acheminement (4, 6) et les moyens d' immobilisation (7), et une seconde paire de segments (15', 15'') s'étendant vers les moyens d'accrochage (10) et réunis par la ladite ganse (14).

5. Machine de nouage suivant les revendications précédentes, caractérisée en ce que les moyens de préhension (3) sont actionnés de manière à se déplacer suivant une direction sensiblement verticale, entre une position supérieure proche des moyens d'acheminement (4, 6) et une position inférieure éloignée des moyens d'acheminement (4, 6).

6. Machine de nouage suivant la revendication 1, caractérisée en ce que les moyens d'acheminement comprennent une bobine (5) de ficelle et un élément de guidage (6) venant en prise par frottement avec la ficelle de manière à former ladite partie tendue.

7. Machine de nouage suivant les revendications précédentes, caractérisée en ce qu'elle comprend en outre un élément de positionnement (24) comprenant une tige (25) portant une tête (26), la tige étant mobile dans un sens et dans l'autre suivant une direction sensiblement horizontale, de manière à amener la partie tendue (9') de ficelle dans une position plus proche du bras (2) afin de favoriser la venue en prise de la partie tendue (9') avec les moyens d'accrochage (11, 11').
